# EUROPÄISCHE PATENTSCHRIFT

(11) **EP 2 771 220 B1**
(45) Veröffentlichungstag und Bekanntmachung des Hinweises auf die Patenterteilung: **19.12.2018**
(21) Anmeldenummer: 12773270.9
(22) Anmeldetag: 26.09.2012
(51) Int. Cl.: F16C 33/80, B61F 15/20, F16C 35/073, B61C 9/38

(54) **ANTRIEBSWELLENANORDNUNG FÜR EINEN FAHRZEUGANTRIEB**
DRIVE SHAFT ARRANGEMENT FOR A VEHICLE DRIVE
ENSEMBLE ARBRE DE TRANSMISSION POUR UN ENTRAÎNEMENT DE VÉHICULE

(30) Priorität: 28.10.2011 DE 102011054902
(43) Veröffentlichungstag der Anmeldung: 03.09.2014
(73) Patentinhaber: Bombardier Transportation GmbH, 10785 Berlin (DE)
(72) Erfinder: BIEKER, Guido, 57399 Kirchhundern (DE); KLEIN, Helmut, 57258 Freudenberg (DE); KIESSLING, Karsten, 57234 Wilnsdorf (DE)
(74) Vertreter: Cohausz & Florack
(86) Internationale Anmeldenummer: PCT/EP2012/069012
(87) Internationale Veröffentlichungsnummer: WO 2013/060548

(56) Entgegenhaltungen:
- WO-A1-99/48742
- DE-A1-102007 052 574
- US-A1- 2008 085 069

## Beschreibung

### Hintergrund der Erfindung

Die vorliegende Erfindung betrifft eine Antriebswellenanordnung für einen Fahrzeugantrieb, insbesondere Radsatzwellenanordnung für ein Schienenfahrzeug, mit einer Welle zur Übertragung eines Antriebsmoments und einem Ringelement, wobei das Ringelement nicht an der Übertragung des Antriebsmoments beteiligt ist. Das Ringelement ist über eine Kontaktflächenpaarung aus einer ringförmigen ersten Kontaktfläche und einer ringförmigen zweiten Kontaktfläche der Welle mit der Welle verbunden, wobei die erste Kontaktfläche aus wenigstens einem ersten Material aufgebaut ist und die zweite Kontaktfläche aus einem zweiten Material aufgebaut ist. Die Erfindung betrifft weiterhin ein Fahrwerk sowie ein Fahrzeug mit einer solchen Antriebswellenanordnung.

Bei einer Vielzahl von Fahrzeugen, insbesondere modernen Schienenfahrzeugen, müssen in der Regel vergleichsweise hohe Momente bzw. Leistungen übertragen werden, um das Fahrzeug anzutreiben. Dies wirkt sich natürlich unmittelbar auf die Gestaltung des Antriebs, insbesondere der verwendeten Antriebswellen aus. So werden beispielsweise Radsatzwellen von Schienenfahrzeugen und damit verbundene Teile wie das Laufrad, das Getriebezahnrad aber auch die Lagerringe und Lagerdichtringe in der Regel durch Pressverbindungen gefügt, um einen dauerfesten Verbund zu schaffen, welcher gegebenenfalls entsprechend hohe Drehmomente übertragen kann. Dabei werden für das Aufbringen der zu verbindenden Teile auf die Welle typischerweise Fügeverfahren wie das so genannte Längspressen und das Schrumpfen verwendet.

Alle diese Pressverbindungen sind mit dem Problem behaftet, dass ihre Dauerfestigkeit, also die ertragbare Dauerbelastung, infolge der mehr oder weniger starken Pressverbindung durch einen als Reibkorrosion bezeichneten Schädigungsmechanismus teils deutlich reduziert wird. Hierbei kommt es bei (schwellender oder wechselnder) Belastung zu Mikrobewegungen zwischen den Kontaktflächen der Kontaktpartner, wobei sich zumindest unterstützt durch korrosive Prozesse im Kontaktbereich Abriebspartikel bilden. Diese Abriebspartikel bedingen ihrerseits eine lokale Spannungskonzentration, erhöhen also die lokalen Kerbspannungen, welche zur Bildung von lokalen Spannungsrissen, zur Rissausbreitung und letztlich zu einem frühzeitigen Versagen der Welle führen können.

Um die gewünschte Dauerfestigkeit der Welle zu gewährleisten, wird der Durchmesser der Welle bei gattungsgemäßen Antriebswellenanordnungen typischerweise im Kontaktbereich mit dem aufgepressten bzw. aufgeschrumpften Element (mithin also im so genannten Sitzbereich) deutlich größer gewählt als im so genannten Schaftbereich (also dem außerhalb des Sitzbereichs liegenden Bereich, in dem kein Element auf der Welle sitzt). Dies gilt nicht nur für die an der Übertragung des Antriebsmoments beteiligten Komponenten (wie Rädern und Zahnrädern), sondern auch für die nicht an der Übertragung des Antriebsmoments beteiligten Komponenten (wie Lagerringe und Dichtringe). Diese nicht an der Übertragung des Antriebsmoments beteiligten Komponenten sind zwar im Betrieb geringeren Belastungen ausgesetzt und können daher mit einer geringeren Flächenpressung aufgesetzt werden.
Hierdurch ergeben sich jedoch stärkere Relativbewegungen im Betrieb, welche ihrerseits den Schädigungsmechanismus der Reibkorrosion verstärken.
Durch diese so genannte abgesetzte Gestaltung der Welle lassen sich zwar die lokalen Spannungen im Kontaktbereich reduzieren, wodurch die Dauerfestigkeit steigt. Der benötigte Bauraum bzw. das Volumen der Welle und der Aufwand für die Herstellung der Welle erhöhen sich hierdurch jedoch erheblich.
Zwar könnte zur Reduktion der Schädigung der Welle durch Reibkorrosion grundsätzlich eine Erhöhung der Korrosionsbeständigkeit der beteiligten Komponenten vorgesehen werden, beispielsweise durch die Verwendung korrosionbeständiger Materialien oder in Form einer die Korrosionsbeständigkeit erhöhenden Beschichtung. Alle diese Maßnahmen haben jedoch den Nachteil, dass sie die Kosten für die Komponenten erheblich in die Höhe treiben.

Beispiele von gattungsbildenden Antriebswellenanordnungen sind aus den Entgegenhaltungen WO 99/48742 A1 und US 2008/085069 A1 bekannt; eine weitere Wellenanordnung, bei der eine Klebeverbindung verwendet wird, um den Fixiervorgang zwischen Lagerring und Bauteil zu verbessern, ist der DE 10 2007 052574 A1 zu entnehmen.

### Kurze Beschreibung der Erfindung

Der vorliegenden Erfindung liegt daher die Aufgabe zu Grunde, eine Antriebswellenanordnung der eingangs genannten Art zur Verfügung zu stellen, welche die oben genannten Probleme nicht oder zumindest in geringerem Maße mit sich bringt und insbesondere auf einfache Weise bei hoher Dauerfestigkeit eine vereinfachte, möglichst klein bauende Gestaltung der Welle ermöglicht.
Die vorliegende Erfindung löst diese Aufgabe ausgehend von einer Antriebswellenanordnung gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man bei gattungsgemäßen Antriebswellenanordnungen, beispielsweise einer Radsatzwellenanordnung für ein Schienenfahrzeug, auf einfache Weise bei hoher Dauerfestigkeit eine vereinfachte, möglichst klein bauende Gestaltung der Welle erzielen kann, wenn im Fügebereich zwischen der Welle und dem Ringelement ein von dem zweiten Material verschiedenes erstes Material vorsieht, welches alleine durch seine mechanischen Eigenschaften eine Reduzierung der Reibkorrosion zwischen der ersten Kontaktfläche und der zweiten Kontaktfläche mit sich bringt. So hat sich gezeigt, dass alleine die mechanischen Eigenschaften des ersten Materials so gewählt werden können, dass es in vorteilhafter Weise den Schädigungsmechanismus der Reibkorrosion reduziert. Durch diese Reduktion der Reibkorrosion vereinfacht sich die Gestaltung der Welle. Insbesondere ist ein geringerer Durchmesserunterschied zwischen dem Sitzbereich und dem Schaftbereich erforderlich, womit sich der für die Welle erforderliche Bauraum, mithin also deren Volumen, ebenso reduziert wie der Aufwand für die Herstellung der Welle.
So kann das erste Material zum einen schon so gewählt werden, dass sich bei der vorliegenden Belastung trotz der Mikrobewegungen zwischen den Bauteilen weniger Abriebspartikel bilden. Dies kann beispielsweise geschehen, indem die Duktilität des ersten Materials entsprechend hoch (insbesondere höher als die Duktilität des zweiten Materials) gewählt wird, sodass es auf die vorliegenden Spannungen mit entsprechend hoher plastischer Verformung und nicht mit einem lokalen Versagen reagieren kann, die zu einer Bildung von Abriebspartikeln führen würde. Der durch die plastische Verformung des ersten Materials realisierte lokale Spannungsabbau führt natürlich auch dazu, dass sich die Spannungen im zweiten Material reduzieren, sodass auch dort in vorteilhafter Weise die Bildung von Abrieb reduziert wird.
Weiterhin können die mechanischen Eigenschaften des ersten Materials schon entsprechend gewählt werden, dass selbst dann, wenn sich aufgrund ungünstiger Spannungsverhältnisse Abriebspartikel aus dem ersten oder zweiten Material gebildet haben, die schädigenden Auswirkungen solcher Abriebspartikel reduzieren. So führt eine erhöhte Duktilität und/oder eine reduzierte Steifigkeit des ersten Materials (gegenüber dem zweiten Material) dazu, dass sich diese Partikel, wenn sie aus dem ersten Material bestehen, selbst entsprechend gut plastisch verformen können, wodurch die lokale Spannungskonzentration und damit ihre Kerbwirkung sinkt. Partikel aus dem zweiten Material können hingegen aus denselben Gründen einfacher in das erste Material eindringen, ohne dass dieses versagt, wodurch ebenfalls eine Reduktion der lokalen Spannungskonzentration und damit der Kerbwirkung erzielt werden kann.

Gemäß einem Aspekt betrifft die Erfindung daher eine Antriebswellenanordnung für einen Fahrzeugantrieb, insbesondere eine Radsatzwellenanordnung für ein Schienenfahrzeug, mit einer Welle zur Übertragung eines Antriebsmoments und einem Ringelement, wobei das Ringelement nicht an der Übertragung des Antriebsmoments beteiligt ist. Das Ringelement ist über eine Kontaktflächenpaarung aus einer ringförmigen ersten Kontaktfläche und einer ringförmigen zweiten Kontaktfläche der Welle mit der Welle verbunden, wobei die erste Kontaktfläche aus wenigstens einem ersten Material aufgebaut ist und die zweite Kontaktfläche aus einem zweiten Material aufgebaut ist. Das erste Material ist von dem zweiten Material verschieden, wobei das erste Material zur Reduzierung einer Reibkorrosion zwischen der ersten Kontaktfläche und der zweiten Kontaktfläche durch seine mechanischen Eigenschaften ausgebildet ist.
Wie bereits oben dargelegt wurde, umfasst das wenigstens eine erste Material bei bevorzugten Varianten der Erfindung ein abriebreduzierendes Material, wobei das abriebreduzierende Material, insbesondere durch eine gegenüber dem zweiten Material erhöhte Duktilität, die Bildung von durch Reibkorrosion bedingten Abriebspartikeln im Kontaktbereich zwischen der ersten Kontaktfläche und der zweiten Kontaktfläche gegenüber einer Vergleichskontaktflächenpaarung aus gleichen bzw. gleichartigen Materialien (welche das zweite Material umfassen) reduziert. Hierdurch kann in vorteilhafter Weise durch die mechanischen Eigenschaften des ersten Materials der Abrieb und die damit einhergehende Schädigung reduziert werden.
Wie ebenfalls bereits dargelegt wurde, kann bei weiteren bevorzugten Varianten der Erfindung vorgesehen sein, dass das wenigstens eine erste Material ein kerbspannungsreduzierendes Material umfasst, wobei das kerbspannungsreduzierende Material, insbesondere durch eine gegenüber dem zweiten Material erhöhte Duktilität und/oder durch eine gegenüber dem zweiten Material reduzierte Steifigkeit, die Kerbwirkung von durch Reibkorrosion bedingten Abriebspartikeln im Kontaktbereich zwischen der ersten Kontaktfläche und der zweiten Kontaktfläche gegenüber Abriebspartikeln einer Vergleichskontaktflächenpaarung aus gleichartigen Materialien (welche das zweite Material umfassen) reduziert. Hierdurch können in vorteilhafter Weise durch die mechanischen Eigenschaften des ersten Materials die Auswirkungen des Abriebs und somit die damit einhergehende Schädigung reduziert werden.
Als erstes Material kommen grundsätzlich beliebige geeignete Materialien infrage, welche die oben beschriebenen Anforderungen hinsichtlich Reduzierung des Abriebs oder seiner Auswirkungen erfüllen. Vorzugsweise umfasst das wenigstens eine erste Material ein Kunststoffmaterial. Hierbei eignen sich insbesondere Kunststoffmaterialien, die Gummi umfassen. Ebenso sind Kunststoffmaterialien, die Polytetrafluorethylen (PTFE) umfassen besonders geeignet. Dabei versteht es sich, dass beliebige Kombinationen geeigneter Kunststoffmaterialien verwendet werden können. Das Kunststoffmaterial kann ohne weitere Armierung verwendet werden. Bevorzugt ist jedoch vorgesehen, dass das Kunststoffmaterial eine Armierung, insbesondere eine Faserarmierung und/oder eine Gewebearmierung, umfasst, um dessen Dauerfestigkeit auch unter hohen Belastungen zu gewährleisten.

Bei weiteren bevorzugten Varianten der erfindungsgemäßen Antriebswellenanordnung ist vorgesehen, dass das wenigstens eine erste Material ein geeignetes Metall umfasst, welche die oben beschriebenen mechanischen Eigenschaften hinsichtlich der Reduktion der Reibkorrosion aufweist. Insbesondere kann vorgesehen sein, dass das wenigstens eine erste Material eine Messinglegierung umfasst, da diese Messinglegierungen insoweit besonders günstige mechanische Eigenschaften aufweist. Zusätzlich oder alternativ kann das wenigstens eine erste Material eine Bronzelegierung umfassen, da diese Bronzelegierungen insoweit ähnlich günstige mechanische Eigenschaften aufweisen.

Zusätzlich oder alternativ kann das wenigstens eine erste Material ein Korrosionsschutzmaterial, insbesondere Molybdän, umfassen, da hiermit in vorteilhafter Weise der korrosive Anteil des Schädigungsmechanismus reduziert werden kann.

Bei weiteren bevorzugten Ausführungsformen der erfindungsgemäßen Antriebswellenanordnung kann vorgesehen sein, dass das wenigstens eine erste Material ein adhäsives Material umfasst, wobei das adhäsive Material insbesondere ein Kunstharzmaterial umfasst. Hierdurch ist es möglich, die im Kontaktbereich vorliegenden Spannungen insoweit zu reduzieren, als zumindest ein Teil der Verbindung stoffschlüssig realisiert wird. Diese Variante eignet sich besonders für die Befestigung von Komponenten, welche im Betrieb geringeren Belastungen ausgesetzt sind, also beispielsweise nicht an der Übertragung des Antriebsmoments oder an der Einleitung von Stützkräften in die Welle (die beispielsweise zur Abstützung der Welle selbst und/oder zur Abstützung von externen Komponenten, beispielsweise Getriebeeinrichtungen, auf der Welle dienen) beteiligt sind, wie dies beispielsweise bei auf der Welle sitzenden Komponenten von Dichtungen der Fall ist.

Die Paarung zwischen dem ersten und zweiten Material kann grundsätzlich beliebig gewählt und hinsichtlich der Materialparameter aufeinander abgestimmt werden. Hierbei kann der Fokus auf beliebige geeignete Materialparameter gelegt werden, beispielsweise die jeweilige Korrosionsbeständigkeit, die jeweilige thermische Leitfähigkeit oder dergleichen. Bei bevorzugten Varianten der Erfindung wird eine Abstimmung hinsichtlich des thermischen Ausdehnungskoeffizienten zwischen dem ersten und zweiten Material vorgenommen, da diese im Hinblick auf die Spannungen im Dauerbetrieb von entsprechend hoher Bedeutung sind. So weist hierbei das wenigstens eine erste Material einen ersten thermischen Ausdehnungskoeffizienten auf, während das zweite Material einen zweiten thermischen Ausdehnungskoeffizienten aufweist, wobei der erste thermische Ausdehnungskoeffizient an den zweiten thermischen Ausdehnungskoeffizienten angepasst ist, insbesondere der erste thermische Ausdehnungskoeffizient dem zweiten thermischen Ausdehnungskoeffizienten zumindest im Wesentlichen entspricht. Durch diese zumindest weit gehende Angleichung der thermischen Ausdehnungskoeffizienten kann erreicht werden, dass auch bei einer Veränderung der Betriebstemperatur, insbesondere einer Erhöhung der Betriebstemperatur im Dauerbetrieb, durch die weit gehend synchrone thermische Ausdehnung der Welle und des Ringelements zum einen keine erhebliche Erhöhung der Spannungen im Kontaktbereich erfolgt. Zum anderen kann der ausreichend feste Sitz zwischen Welle und der Ringelement gewährleistet werden, sodass es zu keinen übermäßigen Relativbewegungen damit zu einer erhöhten Reibkorrosion kommt.

Das zweite Material kann entsprechend den Anforderungen an den Antrieb, insbesondere das zu übertragende Antriebsmoment bzw. die zu übertragende Antriebsleistung, auf beliebige geeignete Weise gewählt sein. Vorzugsweise umfasst das zweite Material ein Metall, wobei das zweite Material insbesondere Stahl umfasst.

Wie bereits erwähnt, kann das Ringelement unter einem Presssitz im Bereich der ersten Kontaktfläche und der zweiten Kontaktfläche mit der Welle verbunden sein, wodurch in vorteilhafter Weise ein sicherer und fester Sitz des Ringelements auf der Welle realisiert werden kann. Zusätzlich oder alternativ kann das Ringelement über eine adhäsive Verbindung im Bereich der ersten Kontaktfläche und der zweiten Kontaktfläche mit der Welle verbunden sein. Diese Variante der Verbindung eignet sich, wie oben bereits ausgeführt wurde, besonders für Ringselemente, welche einer vergleichweise geringen Belastung im Betrieb unterliegen.

Bei bevorzugten, weil unter anderem einfach herzustellenden Varianten der erfindungsgemäßen Antriebswellenanordnung ist die erste Kontaktfläche durch eine Zwischenlage zwischen dem Ringelement und der Welle ausgebildet. Hierdurch ist eine besonders einfache Herstellbarkeit der Anordnung gewährleistet. So kann die Zwischenlage beispielsweise nach Art einer Hülse oder dergleichen gestaltet sein, welche zwischen das Ringelement und die Welle eingefügt wird. Bei weiteren bevorzugten Varianten der Erfindung kann die Zwischenlage durch eine Beschichtung des Ringelements ausgebildet sein. Ebenso kann aber natürlich auch eine entsprechende Beschichtung der Welle vorgesehen sein. In beiden Fällen ergibt sich wegen der mechanischen Verbindung der Beschichtung ein besonders einfach zu realisierender Fügeprozess.
Bei weiteren Varianten der erfindungsgemäßen Antriebswellenanordnung bildet das Ringelement selbst die erste Kontaktfläche aus, wobei das Ringelement dann ganz oder teilweise aus dem ersten Material besteht.

Erfindungsgemäß ist eine Stützeinrichtung zur Einleitung von Stützkräften in die Welle im Betrieb vorgesehen, wobei das Ringelement Bestandteil der Stützeinrichtung ist, und zwar ein Lagerring der Stützeinrichtung ist. Hiermit lassen sich die oben beschriebenen Vorteile im Bereich solcher Stützeinrichtungen realisieren.

Alternativ dazu ist erfindungsgemäß ebenfalls eine Stützeinrichtung zur Einleitung von Stützkräften in die Welle im Betrieb vorgesehen, wobei das Ringelement dann allerdings nicht an der Einleitung der Stützkräfte beteiligt ist. Mithin wird die Erfindung dann im Zusammenhang mit mechanisch vergleichsweise niedrig belasteten Komponenten der Antriebswellenanordnung eingesetzt. Hierbei kann es sich um beliebige Komponenten handeln, die weder an der Übertragung des Antriebsmoments noch an der Einleitung der Stützkräfte beteiligt sind. Bei der vorliegenden Erfindung handelt es sich bei dem Ringelement jedoch um einen Bestandteil einer Dichtungsanordnung, vorzugsweise einer Labyrinthdichtung, wobei das Ringelement insbesondere ein Labyrinthring sein kann.
Es sei an dieser Stelle erwähnt, dass das wenigstens eine erste Material auf beliebige geeignete Weise im Bereich der ersten Kontaktfläche zur Verfügung gestellt sein kann. So kann es in Form eines soliden Blocks bzw. einer einzigen Schicht gestaltet sein. Ebenso kann ein mehrschichtiger Aufbau vorgesehen sein, wobei die oben beschriebenen ersten Materialien einzeln oder in beliebiger geeigneter Kombination und/oder Schichtabfolge zur Anwendung kommen können.
Die vorliegende Erfindung betrifft weiterhin ein Fahrwerk, insbesondere für ein Schienenfahrzeug, mit einer erfindungsgemäßen Antriebswellenanordnung. Vorzugsweise handelt es sich hierbei um eine Radsatzwellenanordnung des Fahrwerks. Weiterhin betrifft die vorliegende Erfindung ein Fahrzeug, insbesondere ein Schienenfahrzeug, mit einer erfindungsgemäßen Antriebswellenanordnung.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt.

### Kurze Beschreibung der Zeichnungen

- Figur 1: ist eine schematische Ansicht eines Teils einer bevorzugten Ausführungsform des erfindungsgemäßen Fahrzeugs mit einer bevorzugten Ausführungsform des erfindungsgemäßen Fahrwerks, welches eine bevorzugte Ausführungsform der erfindungsgemäßen Antriebswellenanordnung umfasst;
- Figur 2: ist eine schematische Ansicht des Details II aus Figur 1;
- Figur 3: ist eine dem Detail II aus Figur 2 entsprechende schematische Ansicht einer weiteren bevorzugten Ausführungsform der erfindungsgemäßen Antriebswellenanordnung.

### Detaillierte Beschreibung der Erfindung

### Erstes Ausführungsbeispiel

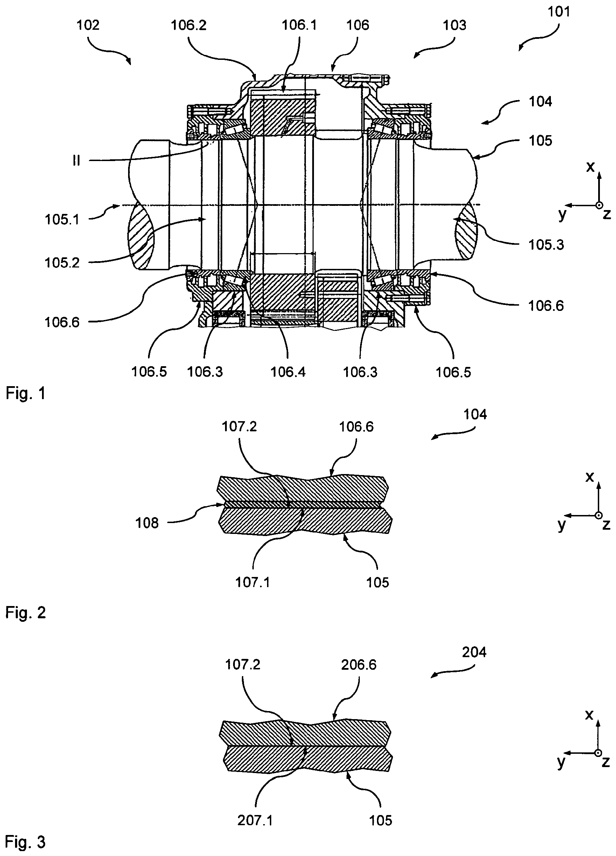

Im Folgenden wird unter Bezugnahme auf die Figuren 1 und 2 ein erstes bevorzugtes Ausführungsbeispiel des erfindungsgemäßen Fahrzeugs in Form eines Schienenfahrzeugs 101 beschrieben. Bei dem Schienenfahrzeug 101 handelt es sich um einen Endwagen eines Triebzugs, dessen Nennbetriebsgeschwindigkeit oberhalb von 180 km/h, nämlich bei vₙ = 200 km/h, liegt.

Das Fahrzeug 101 umfasst einen (nicht dargestellten) Wagenkasten, der im Bereich seiner beiden Enden in herkömmlicher Weise jeweils auf einem Fahrwerk in Form eines (in Figur 1 nur ausschnittsweise dargestellten) Drehgestells 102 mit zwei Radsätzen 103 abgestützt ist (von denen in Figur 1 nur ein Radsatz 103 ausschnittsweise dargestellt ist). Es versteht sich jedoch, dass die vorliegende Erfindung auch in Verbindung mit anderen Konfigurationen eingesetzt werden kann, bei denen der Wagenkasten lediglich unmittelbar auf einem Fahrwerk abgestützt ist. Ebenso können anstelle von Radsätzen auch anderweitige Radeinheiten, wie beispielsweise Radpaare, oder aber auch Einzelräder vorgesehen sein.

Zum einfacheren Verständnis der nachfolgenden Erläuterungen ist in der Figur 1 ein (durch die Radaufstandsebene des Drehgestells 102 vorgegebenes) Fahrzeug-Koordinatensystem x,y,z angegeben, in dem die x-Koordinate die Fahrzeuglängsrichtung, die y-Koordinate die Fahrzeugquerrichtung und die z-Koordinate die Fahrzeughöhenrichtung des Schienenfahrzeugs 101 bezeichnen.

Der Radsatz 103 umfasst eine erfindungsgemäße Antriebswellenanordnung in Form einer Radsatzwellenanordnung 104, über welche die (nicht dargestellten) Laufräder des Radsatzes 103 angetrieben werden. Die Radsatzwellenanordnung 104 umfasst hierzu eine Welle 105, auf der neben den Laufrädern unter anderem ein Antriebszahnrad 106.1 eines Getriebes 106 sitzt, über welches das Antriebsmoment bzw. die Antriebsleistung eines (nicht dargestellten) Motors auf die Welle 105 übertragen wird.

Das Getriebe 106 ist über ein Getriebegehäuse 106.2 und Lagereinrichtungen in Form von Kegelrollenlagern 106.3 unter anderem auf der Welle 105 abgestützt. Die Lager 106.3 weisen jeweils ein Ringelement in Form eines inneren Lagerrings 106.4 auf, der auf der Welle 105 sitzt.

Die Abdichtung des Getriebes 106 gegenüber der Umgebung erfolgt unter anderem über Dichtungseinrichtungen in Form von Labyrinthdichtungen 106.5. Die Labyrinthdichtungen 106.5 weisen jeweils ein Ringelement in Form eines inneren Labyrinthrings 106.6 auf, welcher ebenfalls auf der Welle 105 sitzt. Aufgrund der Gestaltung der Dichtungseinrichtung 106.5 als berührungslose Labyrinthdichtung ist der innere Labyrinthring 106.6 im Sinne der vorliegenden Erfindung weder an der Übertragung des Antriebsmoments noch der Einleitung von Stützkräften in die Welle 105 beteiligt.

Wie der Figur 2 zu entnehmen ist (welche das Detail II aus Figur 1 zeigt), ist der innere Labyrinthring 106.6 in einem Presssitz über eine Kontaktflächenpaarung aus einer ringförmigen ersten Kontaktfläche 107.1 und einer ringförmigen zweiten Kontaktfläche 107.2 der Welle 105 mit der Welle 105 verbunden. Hierzu kann der Labyrinthring 106.6 in Richtung der (im vorliegenden Beispiel zur y-Achse parallel ausgerichteten) Längsachse 105.1 der Welle 105 auf den zugeordneten Sitzbereich 105.2 der Welle 105 aufgepresst werden.

Die erste Kontaktfläche 107.1 wird dabei durch eine Zwischenlage 108 ausgebildet, welche zwischen dem inneren Labyrinthring 106.6 und der Welle 105 angeordnet ist. Im vorliegenden Beispiel ist die Zwischenlage 108 als einfache Schicht eines ersten Materials ausgebildet. Hierzu ist sie genauer gesagt als einlagige Beschichtung des Innenumfangs des inneren Labyrinthrings 106.6 ausgebildet.

Es versteht sich jedoch, dass die Zwischenlage 108 bei anderen Varianten der Erfindung auch als mehrlagiger Schichtaufbau gestaltet sein kann, welcher in beliebiger geeigneter Abfolge mehrere Schichten eines oder mehrerer unterschiedlicher Materialien aufweisen kann.

Die erste Kontaktfläche 107.1 ist im vorliegenden Beispiel aus einem ersten Material aufgebaut, welches von dem zweiten Material der Welle 105 verschieden ist, welche die zweite Kontaktfläche 107.2 ausbildet. Im vorliegenden Beispiel handelt es bei dem zweiten Material der Welle um einen geeigneten Stahl.

Das erste Material der Zwischenlage 108 ist derart gewählt, dass seine mechanischen Eigenschaften zur Reduzierung des eingangs beschriebenen als Reibkorrosion bezeichneten Schädigungsmechanismus beitragen. Im vorliegenden Beispiel handelt es sich bei dem ersten Material der Zwischenlage 108 um eine Messinglegierung, da diese günstige mechanischen Eigenschaften hinsichtlich der Reduktion der Reibkorrosion aufweist.

So hat die Messinglegierung der Zwischenlage 108 zum einen den Vorteil, dass sich bei der vorliegenden Belastung trotz der Mikrobewegungen zwischen den beteiligten Komponenten gegenüber einer Vergleichskontaktpaarung aus zwei Stahlkomponenten weniger Abriebspartikel bilden. Dies ist der hohen Duktilität der Messinglegierung geschuldet, dank derer die Zwischenlage 108 auf die vorliegenden Spannungen mit entsprechend hoher plastischer Verformung reagieren kann, ohne lokal zu versagen (was andernfalls zu einer Bildung von Abriebspartikeln führen würde). Der durch die plastische Verformung der Zwischenlage 108 realisierte lokale Spannungsabbau führt natürlich auch dazu, dass sich die Spannungen im zweiten Material reduzieren, sodass auch dort in vorteilhafter Weise die Bildung von Abrieb reduziert wird.

Weiterhin reduziert die Messinglegierung der Zwischenlage 108 selbst dann, wenn sich aufgrund ungünstiger Spannungsverhältnisse Abriebspartikel aus dem ersten oder zweiten Material gebildet haben, die schädigenden Auswirkungen solcher Abriebspartikel. So führt die gegenüber dem Stahl der Welle 105 erhöhte Duktilität und reduzierte Steifigkeit der Messinglegierung dazu, dass sich diese Partikel, wenn sie aus der Messinglegierung bestehen, selbst entsprechend einfach und gut plastisch verformen können, wodurch die lokale Spannungskonzentration und damit ihre Kerbwirkung sinkt. Partikel aus dem Stahl der Welle 105 können hingegen aus denselben Gründen einfacher in die Messinglegierung der Zwischenlage eindringen, ohne dass diese versagt, wodurch ebenfalls eine Reduktion der lokalen Spannungskonzentration und damit der Kerbwirkung erzielt werden kann.

Mithin stellt also die Messinglegierung der Zwischenlage 108 zum einen ein abriebreduzierendes Material dar, welches die Bildung von durch Reibkorrosion bedingten Abriebspartikeln im Kontaktbereich zwischen der ersten Kontaktfläche 107.1 und der zweiten Kontaktfläche 107.2 gegenüber einer Vergleichskontaktflächenpaarung aus Stahlkomponenten reduziert.

Ebenso stellt die Messinglegierung demgemäß ein kerbspannungsreduzierendes Material im Sinne der vorliegenden Erfindung dar, welches die Kerbwirkung von durch Reibkorrosion bedingten Abriebspartikeln im Kontaktbereich zwischen der ersten Kontaktfläche 107.1 und der zweiten Kontaktfläche 107.2 gegenüber Abriebspartikeln einer Vergleichskontaktflächenpaarung aus Stahlkomponenten reduziert.

Dank dieser im Hinblick auf den Schädigungsmechanismus der Reibkorrosion vorteilhaften Eigenschaften und der Messinglegierung der Zwischenlage 108 kann bei hoher Dauerfestigkeit der Welle 105 gegenüber herkömmlichen Gestaltungen (mit der Paarung identischer oder zumindest gleichartiger Materialien im Kontaktbereich der ersten und zweiten Kontaktfläche) eine vereinfachte, klein bauende Gestaltung der Welle erzielt werden. So ist gegenüber diesen herkömmlichen Gestaltungen insbesondere ein geringerer Durchmesserunterschied zwischen dem Sitzbereich 105.2 und dem Schaftbereich 105.3 der Welle 105 (mithin also eine kleinere Abstufung der Welle 105 im Schaftbereich 105.3 gegenüber dem Sitzbereich 105.2) erforderlich, womit sich der für die Welle 105 erforderliche Bauraum, mithin also deren Volumen, ebenso reduziert wie der Aufwand für die Herstellung der Welle 105.

Bei weiteren bevorzugten Varianten der Erfindung kann für die Zwischenlage 108 auch ein anderes Metall vorgesehen sein, welches die oben beschriebenen mechanischen Eigenschaften hinsichtlich der Reduktion der Reibkorrosion aufweist. Insbesondere kann anstelle der Messinglegierung eine Bronzelegierung verwendet werden, welche insoweit ähnlich günstige mechanische Eigenschaften aufweist.

Es versteht sich, dass bei anderen Varianten der Erfindung für die Zwischenlage 108 auch andere, nicht metallische Materialien verwendet werden können. So kann für die Zwischenlage 108 ein Kunststoffmaterial, beispielsweise Gummi oder Polytetrafluorethylen (PTFE), zum Einsatz kommen. Hierbei kann das Kunststoffmaterial eine Armierung, insbesondere eine Faserarmierung und/oder eine Gewebearmierung, aufweisen, um dessen Dauerfestigkeit auch unter hohen Belastungen zu gewährleisten.

Weiterhin kann die Zwischenlage 108 bei anderen Varianten der Erfindung ein Korrosionsschutzmaterial, insbesondere Molybdän, umfassen, da hiermit in vorteilhafter Weise der korrosive Anteil des Schädigungsmechanismus reduziert werden kann.

Schließlich kann die Zwischenlage 108 bei weiteren bevorzugten Ausführungsformen der Erfindung ein adhäsives Material, insbesondere ein Kunstharzmaterial, umfassen. Hierdurch ist es möglich, die im Kontaktbereich vorliegenden Spannungen insoweit zu reduzieren, als (zusätzlich oder gegebenenfalls sogar alternativ zum Presssitz) zumindest ein Teil der Verbindung zwischen dem inneren Labyrinthring 106.6 und der Welle 105 stoffschlüssig realisiert wird.

Es versteht sich, dass die Zwischenlage 108 bei anderen Varianten der Erfindung nicht als Beschichtung des Ringelements 106.6 sondern nach Art einer Hülse oder dergleichen gestaltet sein kann, welche zwischen das Ringelement 106.6 und die Welle 105 eingefügt wird.

Schließlich versteht es sich, dass auch die Verbindung zwischen dem inneren Lagerring 106.4 des Lagers 106.3 und der Welle 105 in analoger Weise gestaltet sein kann. Auch dort kann eine der Zwischenlage 108 entsprechende Zwischenlage in der oben beschriebenen Weise vorgesehen sein. Mithin lassen sich die oben beschriebenen Vorteile hinsichtlich der Reibkorrosion auch im Bereich solcher Stützeinrichtungen realisieren, über welche Stützkräfte in die Welle 105 eingeleitet werden.

### Zweites Ausführungsbeispiel

Im Folgenden wird unter Bezugnahme auf die Figuren 1 und 3 ein weiteres bevorzugtes Ausführungsbeispiel des erfindungsgemäßen Schienenfahrzeugs 101 mit einem zweiten bevorzugten Ausführungsbeispiel der erfindungsgemäßen Antriebswellenanordnung 204 beschrieben. Die Antriebswellenanordnung 204 kann die Antriebswellenanordnung 104 in dem Fahrzeug 101 ersetzen. Die Antriebswellenanordnung 204 gleicht in ihrer grundsätzlichen Funktion und ihrem grundsätzlichen Aufbau der Antriebswellenanordnung 104, sodass hier lediglich auf die Unterschiede eingegangen werden soll. Insbesondere sind gleichartige Komponenten mit um den Wert 100 erhöhten Bezugszeichen versehen, während identische Komponenten mit identischen Bezugszeichen versehen sind. Sofern nachfolgend keine anderweitigen Ausführungen gemacht werden, wird hinsichtlich der Merkmale und Eigenschaften dieser Komponenten ausdrücklich auf die obigen Ausführungen verwiesen.

Der Unterschied der Antriebswellenanordnung 204 zu der Antriebswellenanordnung 104 besteht lediglich darin, dass zwischen dem durch den inneren Labyrinthring 206.6 gebildeten Ringelement und der Welle 105 keine Zwischenlage angeordnet ist, sondern der innere Labyrinthring 206.6 selbst die erste Kontaktfläche 207.1 bildet, wobei er aus einem ersten Material aufgebaut ist, wie es im Zusammenhang mit dem ersten Ausführungsbeispiel für die Zwischenlage 108 beschrieben wurde.

Im vorliegenden Beispiel ist hierzu beispielsweise bevorzugt vorgesehen, dass der innere Labyrinthring 206.6 zumindest teilweise, vorzugsweise sogar vollständig, aus einem entsprechend armierten Kunststoffmaterial aufgebaut ist. Ebenso kann der innere Labyrinthring 206.6 aber auch aus den oben beschriebenen metallischen Materialien, insbesondere einer Messinglegierung oder einer Bronzelegierung, oder beliebigen Kombinationen der vorbeschriebenen Materialien aufgebaut sein.

Die vorliegende Erfindung wurde vorstehend ausschließlich anhand einer Radsatzwellenanordnung beschrieben. Es versteht sich jedoch, dass die Erfindung auch im Zusammenhang mit beliebigen anderen Antriebskomponenten zum Einsatz kommen kann, bei denen entsprechend hohe Antriebsmomente bzw. Antriebsleistungen zu übertragen sind und der Schädigungsmechanismus der Reibkorrosion eine Rolle spielt.

Die vorliegende Erfindung wurde vorstehend weiterhin ausschließlich im Zusammenhang mit Schienenfahrzeugen beschrieben, die mit vergleichsweise hohen Nennbetriebsgeschwindigkeiten verkehren. Es versteht sich jedoch, dass die Erfindung auch im Zusammenhang mit anderen Fahrzeugen, insbesondere bei niedrigeren oder aber auch noch höheren Nennbetriebsgeschwindigkeiten zum Einsatz kommen kann.

## Patentansprüche

1. Antriebswellenanordnung für einen Fahrzeugantrieb, insbesondere Radsatzwellenanordnung für ein Schienenfahrzeug, mit
- einer Welle (105) zur Übertragung eines Antriebsmoments,
- einer Stützeinrichtung (106.3) zur Einleitung von Stützkräften in die Welle (105) im Betrieb, und
- einem Ringelement (106.4, 106.6; 206.6), wobei
- das Ringelement (106.4, 106.6; 206.6) nicht an der Übertragung des Antriebsmoments beteiligt ist,
- das Ringelement (106.4, 106.6; 206.6) über eine Kontaktflächenpaarung aus einer ringförmigen ersten Kontaktfläche (107.1; 207.1) und einer ringförmigen zweiten Kontaktfläche der Welle (105) mit der Welle (105) verbunden ist,
- die erste Kontaktfläche (107.1; 207.1) aus wenigstens einem ersten Material aufgebaut ist und
- die zweite Kontaktfläche (107.2) aus einem zweiten Material aufgebaut ist, wobei
- das erste Material von dem zweiten Material verschieden ist, wobei
- das erste Material zur Reduzierung einer Reibkorrosion zwischen der ersten Kontaktfläche (107.1; 207.1) und der zweiten Kontaktfläche (107.2) durch seine mechanischen Eigenschaften ausgebildet ist,
**dadurch gekennzeichnet, dass**
- das Ringelement (106.4) ein Lagerring der Stützeinrichtung (106.3) ist
oder
- das Ringelement (106.4, 106.6; 206.6) als Bestandteil einer Dichtungsanordnung (106.5) nicht an der Einleitung der Stützkräfte beteiligt ist.

2. Antriebswellenanordnung nach Anspruch 1, **dadurch gekennzeichnet, dass**
- das wenigstens eine erste Material ein abriebreduzierendes Material umfasst, wobei
- das abriebreduzierende Material, insbesondere durch eine gegenüber dem zweiten Material erhöhte Duktilität, die Bildung von durch Reibkorrosion bedingten Abriebspartikeln im Kontaktbereich zwischen der ersten Kontaktfläche (107.1; 207.1) und der zweiten Kontaktfläche (107.2) gegenüber einer Vergleichskontaktflächenpaarung aus gleichartigen Materialien reduziert.

3. Antriebswellenanordnung nach Anspruch 1 oder 2, **dadurch gekennzeichnet, dass**
- das wenigstens eine erste Material ein kerbspannungsreduzierendes Material umfasst, wobei
- das kerbspannungsreduzierende Material, insbesondere durch eine gegenüber dem zweiten Material erhöhte Duktilität und/oder durch eine gegenüber dem zweiten Material reduzierte Steifigkeit, die Kerbwirkung von durch Reibkorrosion bedingten Abriebspartikeln im Kontaktbereich zwischen der ersten Kontaktfläche (107.1; 207.1) und der zweiten Kontaktfläche (107.2) gegenüber Abriebspartikeln einer Vergleichskontaktflächenpaarung aus gleichartigen Materialien reduziert.

4. Antriebswellenanordnung nach einem der Ansprüche 1 bis 3, **dadurch gekennzeichnet, dass**
- das wenigstens eine erste Material ein Kunststoffmaterial umfasst, wobei
- das Kunststoffmaterial insbesondere Gummi umfasst
und/oder
- das Kunststoffmaterial insbesondere Polytetrafluorethylen (PTFE) umfasst.
und/oder
- das Kunststoffmaterial insbesondere eine Armierung, insbesondere eine Faserarmierung und/oder eine Gewebearmierung, umfasst.

5. Antriebswellenanordnung nach einem der Ansprüche 1 bis 4, **dadurch gekennzeichnet, dass**
- das wenigstens eine erste Material ein Metall umfasst
und/oder
- das wenigstens eine erste Material eine Messinglegierung umfasst
und/oder
- das wenigstens eine erste Material eine Bronzelegierung umfasst
und/oder
- das wenigstens eine erste Material ein Korrosionsschutzmaterial, insbesondere Molybdän, umfasst.

6. Antriebswellenanordnung nach einem der Ansprüche 1 bis 5, **dadurch gekennzeichnet, dass**
- das wenigstens eine erste Material ein adhäsives Material umfasst, wobei
- das adhäsive Material insbesondere ein Kunstharzmaterial umfasst.

7. Antriebswellenanordnung nach einem der Ansprüche 1 bis 6, **dadurch gekennzeichnet, dass**
- das wenigstens eine erste Material einen ersten thermischen Ausdehnungskoeffizienten aufweist und
- das zweite Material einen zweiten thermischen Ausdehnungskoeffizienten aufweist, wobei
- der erste thermische Ausdehnungskoeffizient an den zweiten thermischen Ausdehnungskoeffizienten angepasst ist, insbesondere der erste thermische Ausdehnungskoeffizient dem zweiten thermischen Ausdehnungskoeffizienten zumindest im Wesentlichen entspricht.

8. Antriebswellenanordnung nach einem der Ansprüche 1 bis 7, **dadurch gekennzeichnet, dass**
- das zweite Material ein Metall umfasst, wobei
- das zweite Material insbesondere Stahl umfasst.

9. Antriebswellenanordnung nach einem der Ansprüche 1 bis 8, **dadurch gekennzeichnet, dass**
- das Ringelement (106.4, 106.6; 206.6) unter einem Presssitz im Bereich der ersten Kontaktfläche (107.1; 207.1) und der zweiten Kontaktfläche (107.2) mit der Welle (105) verbunden ist
und/oder
- das Ringelement (106.6; 206.6) über eine adhäsive Verbindung im Bereich der ersten Kontaktfläche (107.1) und der zweiten Kontaktfläche (107.2) mit der Welle (105) verbunden ist.

10. Antriebswellenanordnung nach einem der Ansprüche 1 bis 9, **dadurch gekennzeichnet, dass**
- die erste Kontaktfläche (107.1) durch eine Zwischenlage zwischen dem Ringelement (106.4, 106.6) und der Welle (105) ausgebildet ist, wobei
- die Zwischenlage insbesondere durch eine Beschichtung des Ringelements (106.4, 106.6) ausgebildet ist.

11. Antriebswellenanordnung nach einem der Ansprüche 1 bis 10, **dadurch gekennzeichnet, dass** das Ringelement (206.6) die erste Kontaktfläche (207.1) ausbildet.

12. Antriebswellenanordnung nach einem der Ansprüche 1 bis 11, **dadurch gekennzeichnet, dass**
- das Ringelement (106.6; 206.6) ein Bestandteil einer Labyrinthdichtung (106.5) ist, wobei
- das Ringelement (106.6; 206.6) insbesondere ein Labyrinthring ist.

13. Fahrwerk, insbesondere für ein Schienenfahrzeug, mit einer Antriebswellenanordnung (104; 204) nach einem der Ansprüche 1 bis 12.

14. Fahrzeug, insbesondere Schienenfahrzeug, mit einer Antriebswellenanordnung (104; 204) nach einem der Ansprüche 1 bis 12.

## Claims

1. Drive shaft arrangement for a vehicle drive, in particular wheelset shaft arrangement for a rail vehicle, comprising
- a shaft (105) for transmitting a drive torque
- a support means (106.3) for introducing support forces in said shaft (105) in operation, and
- a ring element (106.4, 106.6, 206.6), wherein
- said ring element (106.4, 106.6, 206.6) is not involved in the transmission of said drive torque,
- said ring element (106.4, 106.6, 206.6) is connected with said shaft (105) via a contact surface pairing formed by an annular first contact surface (107.1; 207.1) and an annular second contact surface of the shaft (105),
- said first contact surface (107.1, 207.1) is constructed of at least one first material
and
- said second contact surface (107.2) is constructed of a second material, wherein
- said first material is different from said second material, wherein
- said first material is configured for reducing a friction corrosion between said first contact surface (107.1; 207.1) and said second contact surface (107.2) by its mechanical properties,
**characterized in that**
- said ring element (106.4) is a bearing ring of said support means (106.3)
or
- said ring element (106.4, 106.6, 206.6), as part of a sealing arrangement (106.5), does not contribute to said introduction of said support forces.

2. Drive shaft arrangement according to claim 1, **characterized in that**
- said at least one first material comprises an abrasion-reducing material, wherein
- said abrasion-reducing material, in particular by an increased ductility in relation to said second material, reduces the formation of abrasion particles caused by fretting corrosion in the contact area between said first contact surface (107.1; 207.1) and said second contact surface (107.2) compared to a reference contact surface pairing of materials of the same type.

3. Drive shaft arrangement according to claim 1 or 2, **characterized in that**
- said at least one first material comprises a notch stress reducing material, wherein
- said notch stress reducing material, in particular by increased ductility in relation to said second material and/or by reduced rigidity in relation to said second material, reduces the notch effect of abrasion particles caused by fretting corrosion in the contact area between said first contact surface (107.1; 207.1) and said second contact surface (107.2) compared to abrasion particles of a reference contact surface pairing of similar materials.

4. Drive shaft arrangement according to one of claims 1 to 3, **characterized in that**
- said at least one first material comprises a plastic material, wherein
- said plastic material in particular comprises rubber,
and/or
- said plastic material in particular comprises polytetrafluoroethylene (PTFE),
and/or
- said plastic material in particular comprises a reinforcement, in particular a fiber reinforcement and/or a fabric reinforcement.

5. Drive shaft arrangement according to one of claims 1 to 4, **characterized in that**
- said at least one first material comprises a metal
and/or
- said at least one first material comprises a brass alloy
and/or
- said at least one first material comprises a bronze alloy
and/or
- said at least one first material comprises a corrosion protection material, in particular molybdenum.

6. Drive shaft arrangement according to one of claims 1 to 5, **characterized in that**
- said at least one first material comprises an adhesive material, wherein
- said adhesive material comprises in particular a synthetic resin material.

7. Drive shaft arrangement according to one of claims 1 to 6, **characterized in that**
- said at least one first material has a first coefficient of thermal expansion and
- said second material has a second coefficient of thermal expansion, wherein
- said first coefficient of thermal expansion is adapted to said second coefficient of thermal expansion, in particular said first coefficient of thermal expansion at least substantially corresponds to said second coefficient of thermal expansion.

8. Drive shaft arrangement according to one of claims 1 to 7, **characterized in that**
- said second material comprises a metal, wherein
- said second material, in particular, comprises steel.

9. Drive shaft arrangement according to one of claims 1 to 8, **characterized in that**
- said ring element (106.4, 106.6, 206.6) is connected with said shaft (105) via a press fit in the region of said first contact surface (107.1; 207.1) and said second contact surface (107.2)
and/or
- said ring element (106.6, 206.6) is connected with said shaft (105) via an adhesive connection in the region of said first contact surface (107.1) and said second contact surface (107.2).

10. Drive shaft arrangement according to one of claims 1 to 9, **characterized in that**
- said first contact surface (107.1) is formed by an intermediate layer between said ring element (106.4, 106.6) and said shaft (105), wherein
- said intermediate layer is formed in particular by a coating of said ring element (106.4, 106.6).

11. Drive shaft arrangement according to one of claims 1 to 10, **characterized in that** said ring element (206.6) forms said first contact surface (207.1).

12. Drive shaft arrangement according to one of claims 1 to 11, **characterized in that**
- said ring element (106.6, 206.6) is part of a labyrinth seal (106.5), wherein
- said ring element (106.6, 206.6), in particular, is a labyrinth ring.

13. Running gear, in particular for a rail vehicle, with a drive shaft arrangement (104, 204) according to one of claims 1 to 12.

14. Vehicle, in particular rail vehicle, with a drive shaft arrangement (104, 204) according to one of claims 1 to 12.

## Revendications

1. Ensemble d'arbre d'entraînement pour entraînement de véhicule, en particulier ensemble d'arbre d'essieu pour un véhicule ferroviaire, comprenant
- un arbre (105) pour transmettre un couple d'entraînement,
- un moyen de support (106.3) pour introduire des forces de support dans l'arbre (105) lors de l'opération, et
- un élément annulaire (106.4, 106.6, 206.6), dans lequel
- l'élément annulaire (106.4, 106.6, 206.6) ne fait pas partie en la transmission du couple d'entraînement,
- l'élément annulaire (106.4, 106.6, 206.6) est relié avec l'arbre (105) par l'intermédiaire d'un appariement de surfaces de contact formée par une première surface de contact annulaire (107.1; 207.1) et par une seconde surface de contact annulaire de l'arbre (105),
- première surface de contact (107.1, 207.1) est formée à partir d'au moins un premier matériau et
- la seconde surface de contact (107.2) est formée à partir d'un second matériau,
- le premier matériau est différent du second matériau, dans lequel
- le premier matériau est configuré pour réduire une corrosion par frottement entre la première surface de contact (107.1; 207.1) et la seconde surface de contact (107.2) par ses propriétés mécaniques,
**caractérisé en ce que**
- l'élément annulaire (106.4) est une bague de palier du moyen de support (106.3) ou
- l'élément annulaire (106.4, 106.6, 206.6), comme partie d'un ensemble d'étanchéité (106.5), ne fait pas partie en l'introduction de forces de support.

2. Ensemble d'arbre d'entraînement selon la revendication 1, **caractérisé en ce que**
- le premier matériau comprend un matériau réduisant l'abrasion, dans lequel
- le matériau réduisant l'abrasion, en particulier par une ductilité augmentée par rapport au second matériau, réduit la formation de particules d'abrasion causées par corrosion par frottement dans la zone de contact entre la première surface de contact (107.1; 207.1) et la seconde surface de contact (107.2) par rapport à un appariement de surfaces de contact de comparaison de matériaux d'un type similaire.

3. Ensemble d'arbre d'entraînement selon la revendication 1 ou 2, **caractérisé en ce que**
- l'au moins un premier matériel comprend un matériau réducteur de contrainte d'entaille, dans lequel
- le matériau réducteur de contrainte d'entaille, notamment par une ductilité augmentée par rapport au second matériau, et/ou par une rigidité réduite par rapport au second matériau, réduit l'effet de contrainte d'entaille des particules d'abrasion causées par corrosion par frottement dans la zone de contact entre la première surface de contact (107.1; 207.1) et la seconde surface de contact (107.2) par rapport aux particules d'abrasion d'un un appariement de surfaces de contact de comparaison de matériaux d'un type similaire.

4. Ensemble d'arbre d'entraînement selon l'une des revendications 1 à 3, **caractérisé en ce que**
- l'u moins un premier matériau comprend une matière plastique,
- la matière plastique, en particulier, comprenant du caoutchouc,
et/ou
- la matière plastique, en particulier, comprenant du polytétrafluoroéthylène (PTFE),
et/ou
- le matériau plastique, en particulier, comprend un renfort, en particulier un renfort fibreux et/ou un renfort textile.

5. Ensemble d'arbre d'entraînement selon l'une des revendications 1 à 4, **caractérisé en ce que**
- le au moins un premier matériau comprend un métal
et/ou
- le premier matériau comprend un alliage de laiton
et/ou
- le premier matériau comprend un alliage de bronze
et/ou
- le premier matériau comprend un matériau de protection contre la corrosion, en particulier du molybdène.

6. Ensemble d'arbre d'entraînement selon l'une des revendications 1 à 5, **caractérisé en ce que**
- l'au moins un premier matériau comprend un matériau adhésif,
- le matériau adhésif, en particulier, comprenant un matériau en résine synthétique.

7. Ensemble d'arbre d'entraînement selon l'une des revendications 1 à 6, **caractérisé en ce que**
- le premier matériau a un premier coefficient de dilatation thermique et
- le second matériau a un second coefficient de dilatation thermique, dans lequel
- le premier coefficient de dilatation thermique est adapté au second coefficient de dilatation thermique, le premier coefficient de dilatation thermique, en particulier, correspondant au moins sensiblement au second coefficient de dilatation thermique.

8. Ensemble d'arbre d'entraînement selon l'une des revendications 1 à 7, **caractérisé en ce que**
- le second matériau comprend un métal,
- le second matériau, en particulier, comprenant de l'acier.

9. Ensemble d'arbre d'entraînement selon l'une des revendications 1 à 8, **caractérisé en ce que**
- l'élément annulaire (106.4, 106.6, 206.6) est reliée à l'arbre (105) par ajustage serré dans la zone de la première surface de contact (107.1; 207.1) et de la seconde surface de contact (107.2) est et / ou
et/ou
- l'élément annulaire (106.6, 206.6) est relié avec l'arbre (105) par une liaison adhésive dans la région de la première surface de contact (107.1) et de la seconde surface de contact (107.2).

10. Ensemble d'arbre d'entraînement selon l'une des revendications 1 à 9, **caractérisé en ce que**
- la première surface de contact (107.1) est formée par une couche intermédiaire entre l'élément annulaire (106.4, 106.6) et l'arbre (105),
- la couche intermédiaire, en particulier, étant formé par un revêtement de l'élément annulaire (106.4, 106.6).

11. Ensemble d'arbre d'entraînement selon l'une des revendications 1 à 10, **caractérisé en ce que** l'élément annulaire (206.6) forme la première surface de contact (207.1).

12. Ensemble d'arbre d'entraînement selon la revendication 13, **caractérisé en ce que**
- l'élément annulaire (106.6; 206.6) fait partie d'un dispositif d'étanchéité à labyrinthe (106.5), dans lequel
- l'élément annulaire (106.6; 206.6), en particulier, étant une bague de labyrinthe.

13. Train de roulement, en particulier pour une véhicule ferroviaire, comportant un ensemble d'arbre d'entraînement (104; 204) selon l'une des revendications 1 à 12.

14. Véhicule, en particulier véhicule ferroviaire, comportant un ensemble d'arbre d'entraînement (104; 204) selon l'une des revendications 1 à 12.
